# EUROPÄISCHE PATENTSCHRIFT

(11) **EP 1 407 461 B1**
(45) Veröffentlichungstag und Bekanntmachung des Hinweises auf die Patenterteilung: **10.09.2008**
(21) Anmeldenummer: 02753026.0
(22) Anmeldetag: 16.07.2002
(51) Int. Cl.: H01F 38/30, H02B 13/035

(54) **DURCHFÜHRUNGSWANDLER FÜR EINE ELEKTRISCHE SCHALTANLAGE**
BUSHING-TYPE TRANSFORMER FOR A SWITCH GEAR UNIT
TRANSFORMATEUR DE TRAVERSEE CONCU POUR UN DISPOSITIF DE COMMUTATION ELECTRIQUE

(30) Priorität: 17.07.2001 DE 20112356 U
(43) Veröffentlichungstag der Anmeldung: 14.04.2004
(73) Patentinhaber: SIEMENS AKTIENGESELLSCHAFT, 80333 München (DE)
(72) Erfinder: GRÄB, Thomas, 36157 Ebersburg Thalau (DE); EISELT, Martin, 63584 Gründau (DE)
(86) Internationale Anmeldenummer: PCT/DE2002/002635
(87) Internationale Veröffentlichungsnummer: WO 2003/009316

(56) Entgegenhaltungen:
- EP-A- 0 645 782
- WO-A-91/19305
- DE-U- 29 714 253
- US-A- 4 104 497
- US-A- 5 376 911

## Beschreibung

Die Erfindung bezieht sich auf einen Durchführungswandler mit einem den Primärleiter bildenden Leiterstück, welches an seinem einen Ende eine ebene Kontaktfläche und an seinem anderen Ende ein Steckkontaktstück trägt, wobei das Steckkontaktstück rotationssymmetrisch ausgebildet und die Rotationsachse parallel zu der ebenen Kontaktfläche angeordnet ist, sowie mit einer das Leiterstück ringförmig umgebenden Sekundärwicklung. - Derartige Durchführungswandler dienen unter anderem dem Hindurchführen von elektrischen Leitern durch Wandungen von gekapselten Mittelspannungsschaltanlagen. Sie verbinden dort beispielsweise einen Sammelschienenraum mit einem Leistungsschalterraum und ermöglichen die elektrische Verbindung von einer Sammelschiene und einem Leistungsschalter.

Bei einem bekannten Wandler dieser Art (DE 297 14 253 U) sind das den Primärleiter bildende Leiterstück sowie die das Leiterstück ringförmig umgebende Sekundärwicklung in einen Isolierstoffkörper eingebettet. Die ebene Kontaktfläche sowie das Steckkontaktstück sind aus dem Isolierstoffkörper herausgeführt, um die ebene Kontaktfläche beispielsweise an eine elektrische Sammelschiene und das Steckkontaktstück beispielsweise an einen Leistungsschalter elektrisch anschließen zu können. Im Innern eines solchen Durchführungswandlers ist der Leiterzug des Primärleiters gekröpft und abgebogen. Die Knickstellen bilden Orte erhöhter elektrischer Widerstände und höherer Erwärmung, denen der Gesamtaufbau des Durchführungswandlers Rechnung tragen muß.
Der vorliegenden Erfindung liegt die Aufgabe zugrunde, einen Durchführungswandler der eingangs genannten Art so auszubilden, dass bei möglichst kompakter Bauweise eine sichere Wärmeabfuhr gewährleistet ist.

Diese Aufgabe wird dadurch gelöst, dass das Leiterstück linear gestreckt ausgebildet ist und dass das Steckkontaktstück an der Mantelfläche des Leiterstückes angeordnet ist.

Durch die linear gestreckte Ausgestaltung des Leiterstückes ist lediglich im Bereich des mantelseitig angeordneten Steckkontaktstückes einen Stromumlenkung vorhanden, die bei entsprechender Formgebung nur in geringem Maße einen Ort höherer Erwärmung bildet. Dieser Bereich befindet sich auch in hinreichend großer Entfernung zu der Sekundärwicklung, so dass einerseits deren Isolierschicht vor einer Überhitzung geschützt ist und andererseits das Steckkontaktstück thermisch entlastet wird. - Durch die mantelseitige Anordnung des Steckkontaktstückes am Primärleiter weist der Durchführungswandler als Ganzes - bei üblicherweise senkrechtem Anschluß der Kontaktfläche an die Sammelschiene - eine geringe Bautiefe auf.

Es kann vorteilhaft vorgesehen sein, dass das Leiterstück zumindest in einem Teilbereich seiner Länge zwischen der ebenen Kontaktfläche und dem Steckkontaktstück in wenigstens zwei parallele Leiterzweige aufgeteilt ist.

Durch die parallele Anordnung mehrerer Leiterzweige ist es möglich, den durch das Leiterstück des Durchführungswandlers fließenden Strom auf mehrere Zweige aufzuteilen. Aufgrund dieser Aufteilung wird der Stromverdrängungseffekt gemindert. Somit ist es möglich, bei gleichbleibendem Querschnitt gegenüber einem herkömmlich einteilig ausgeführten Primärleiter den Wechselstromwiderstand zu vermindern.

Eine weitere vorteilhafte Ausgestaltung der Erfindung sieht vor, dass jeder Leiterzweig einen rechteckigen Querschnitt aufweist.

Leiterzweige mit einem rechteckigen Querschnitt lassen sich günstig zueinander anordnen und ermöglichen bei Anordnung mehrerer Durchführungswandler nebeneinander innerhalb eines Schaltfeldes einer Schaltanlage eine möglichst geringe Breite des einzelnen Schaltfeldes. Darüber hinaus sind Leiterzweige mit einem rechteckigen Querschnitt mit einem relativ geringen Aufwand herstellbar.

Ein Ausführungsbeispiel der Erfindung ist in einer Zeichnung dargestellt und nachfolgend näher beschrieben.

Dabei zeigt die
- Figur 1: einen Schnitt durch einen Durchführungswandler und die
- Figur 2: eine Ansicht des Primärleiters des Durchführungswandlers.

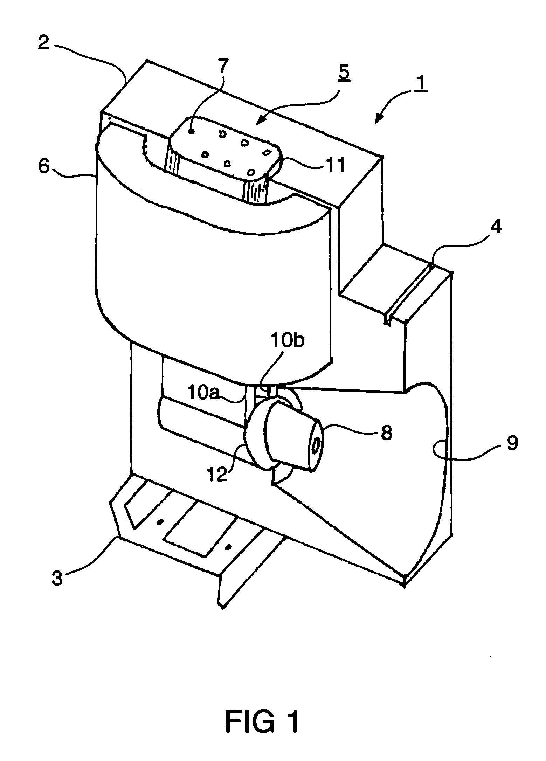

Der in der Figur 1 dargestellte Durchführungswandler 1 weist beispielsweise einen aus Gießharz bestehenden Isolierstoffkörper 2 auf. Der Isolierkstoffkörper 2 ist derartig gestaltet, dass er eine minimale Wandstärke aufweist, die eine ausreichende Isolierfestigkeit bei guter Wärmeabgabe gewährleistet. An dem Isolierstoffkörper 2 ist eine Tragplatte 3 angeordnet. Die Tragplatte 3 dient der Befestigung des Durchführungswandlers 1 an einem Traggestell eines Schaltfeldes. Weiterhin weist der Isolierstoffkörper 1 eine umlaufende Nut 4 auf. In diese Nut 4 ist eine entsprechend ausgesparte Platte einschiebbar. Diese ausgesparte Platte kann beispielsweise eine Schottwand eines Schaltfeldes sein, durch welche ein elektrischer Leiter hindurchzuführen ist. Eine derartige Schottwand kann beispielsweise eine Trennwand zwischen einem Sammelschienenraum, in welchem elektrische Sammelschienen angeordnet sind und einem Schalterraum sein, in welchem ein elektrischer Schalter beispielsweise zum Schalten eines Abgangskabels angeordnet ist.

In den Isolierstoffkörper 2 ist ein den Primärleiter des Durchführungswandlers 1 bildendes linear gestreckt ausgebildetes Leiterstück 5 eingebettet. Dieses Leiterstück 5 verläuft nach einem Einbau des Durchführungswandlers 1 in einen Schaltfeld in vertikaler Richtung. Um das Leiterstück 5 herum ist die Sekundärwicklung 6 des Durchführungswandlers 1 angeordnet. Die Sekundärwicklung 6 kann beispielsweise einen ovalen oder kreisförmigen Querschnitt aufweisen. An dem oberen Ende des Leiterstückes 5 ist aus dem Isolierstoffkörper 2 ein Anschlussstück 11 herausgeführt, welches stirnseitig eine ebene Kontaktfläche 7 bildet. Das Anschlussstück 11 weist in der ebenen Kontaktfläche 7 mehrere Gewindebohrungen auf, mittels welcher eine Sammelschiene an dem Leiterstück 5 mittels Schrauben befestigbar ist. An dem anderen Ende des Leiterstückes 5 ist auf der Mantelfläche des Leiterstückes 5 ein Steckkontaktstück 8 angeordnet. Das Steckkontaktstück 8 ist rotationssymmetrisch ausgebildet. Die Rotationsachse des Steckkontaktstückes 8 verläuft parallel zu der Ebene der Kontaktfläche 7. Das Steckkontaktstück 8 tritt aus der Oberfläche des Isolierstoffkörpers 2 im Bereich des Bodens einer trichterförmigen Öffnung 9 heraus.

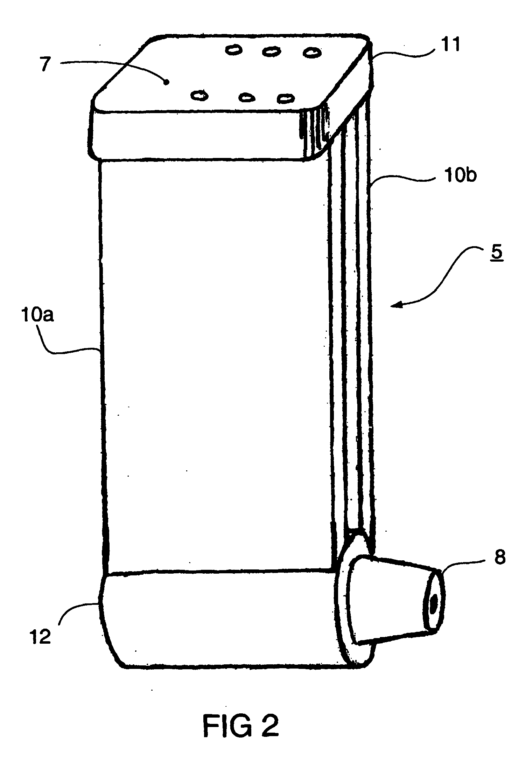

In dem in der Figur 2 separat dargestellten Leiterstück 5 ist die Aufteilung des Leiterstückes 5 zwischen der ebenen Kontaktfläche 7 und dem Steckkontaktstück 8 in zwei parallele Leiterzweige 10a, 10b erkennbar. Die beiden Leiterzweige 10a, 10b sind nach dem Prinzip einer Zweifachsammelschiene ausgebildet. Die Leiterzweige 10a, 10b sind in ihrem einen Endbereich elektrisch leitend sowie mechanisch stabil mit dem Anschlussstück 11 verbunden. An dem anderen Endbereich der Leiterzweige 10a, 10b ist ein zylinderförmiger Körper 12 angeformt. Vorteilhafterweise ist das Leiterstück 5 aus gezogenem Kupfermaterial gebildet. Die einzelnen Teile sind jeweils miteinander verlötet. Alternativ dazu ist eine Fertigung des Leiterstückes 5 in einem Guss-Verfahren möglich.

## Patentansprüche

1. Durchführungswandler (1) mit einem den Primärleiter bildenden Leiterstück (5),
welches an seinem einen Ende eine ebene Kontaktfläche (7) und an seinem anderen Ende ein Steckkontaktstück (8) trägt,
wobei das Steckkontaktstück (8) rotationssymmetrisch ausgebildet und die Rotationsachse parallel zu der ebenen Kontaktfläche (7) angeordnet ist,
sowie mit einer das Leiterstück (5) ringförmig umgebenden Sekundärwicklung (6),
**dadurch gekennzeichnet, dass**
das Leiterstück (5) linear gestreckt ausgebildet ist und dass das Steckkontaktstück (8) an der Mantelfläche des Leiterstückes (5) angeordnet ist.

2. Durchführungswandler (1) nach Anspruch 1,
**dadurch gekennzeichnet, dass**
das Leiterstück (5) zumindest in einem Teilbereich seiner Länge zwischen der ebenen Kontaktfläche (7) und dem Steckkontaktstück (8) in wenigstens zwei parallele Leiterzweige (10a, 10b) aufgeteilt ist.

3. Durchführungswandler (1) nach Anspruch 2,
**dadurch gekennzeichnet, dass**
jeder Leiterzweig (10a, 10b) einen rechteckigen Querschnitt aufweist.

## Claims

1. Bushing-type transformer (1) having a conductor piece (5), which forms the primary conductor,
and has a planar contact face (7) at one of its ends and a plug-in contact piece (8) at its other end,
the plug-in contact piece (8) being rotationally symmetrical, and the axis of rotation being arranged parallel to the planar contact face (7),
as well as having a secondary winding (6) surrounding the conductor piece (5) in the form of a ring,
**characterized in that**
the conductor piece (5) extends linearly, and **in that** the plug-in contact piece (8) is arranged on the outer surface of the conductor piece (5).

2. Bushing-type transformer (1) according to Claim 1,
**characterized in that**
the conductor piece (5) is split into at least two parallel conductor branches (10a, 10b) at least in a subregion of its length between the planar contact face (7) and the plug-in contact piece (8).

3. Bushing-type transformer (1) according to Claim 2,
**characterized in that**
each conductor branch (10a, 10b) has a rectangular cross section.

## Revendications

1. Transformateur ( 1 ) de traversée comprenant une pièce ( 5 ) conductrice formant le conducteur primaire,
qui porte à l'une de ses extrémités une surface ( 7 ) plane de contact et à son autre extrémité une pièce ( 8 ) de contact à enfichage,
la pièce ( 8 ) de contact à enfichage étant de révolution et l'axe de révolution étant parallèle à la surface ( 7 ) plane de contact,
ainsi qu'un enroulement ( 6 ) secondaire entourant annulairement la pièce ( 5 ) conductrice,
**caractérisé en ce que**
la pièce ( 5 ) conductrice s'étend linéairement et la pièce ( 8 ) de contact à enfichage est disposée sur la surface latérale de la pièce ( 5 ) conductrice.

2. Transformateur ( 1 ) de traversée suivant la revendication 1,
**caractérisé en ce que**
la pièce ( 5 ) conductrice est subdivisée en au moins deux branches ( 10a, 10b ) parallèles de conducteur, au moins dans une partie de sa longueur comprise entre la surface ( 7 ) plane de contact et la pièce ( 8 ) de contact à enfichage.

3. Transformateur ( 1 ) de traversée suivant la revendication 2,
**caractérisé en ce que**
chaque branche ( 10a, 10b ) de conducteur a une section transversale rectangulaire.
